(19) Europäisches Patentamt
European Patent Office
Office européen des brevets

(11) **EP 2 292 425 B1**

(12) **EUROPEAN PATENT SPECIFICATION**

(45) Date of publication and mention
of the grant of the patent:
**31.12.2014 Bulletin 2015/01**

(51) Int Cl.:
**B32B 15/08** *(2006.01)*  **B32B 27/36** *(2006.01)*
**B65D 1/12** *(2006.01)*  **C09D 167/00** *(2006.01)*

(21) Application number: **09758102.9**

(22) Date of filing: **02.06.2009**

(86) International application number:
**PCT/JP2009/002465**

(87) International publication number:
**WO 2009/147835 (10.12.2009 Gazette 2009/50)**

(54) **RESIN COVERED STEEL SHEET, WHICH CAN PROVIDE DRAWN AND IRONED CANS HAVING EXCELLENT LUSTER, AND METHOD FOR MANUFACTURING THE RESIN COVERED STEEL SHEET**

HARZBESCHICHTETES STAHLBLECH, DAS GEZOGENE UND ABGESTRECKTE DOSEN MIT HERVORRAGENDEM GLANZ LIEFERN KANN, UND VERFAHREN ZUR HERSTELLUNG VON HARZBESCHICHTETEM STAHLBLECH

TÔLE D'ACIER ENDUITE DE RÉSINE, SUSCEPTIBLE DE FOURNIR DES BOÎTES MÉTALLIQUES ÉTIRÉES ET EMBOUTIES PRÉSENTANT UN BRILLANT EXCELLENT, ET PROCÉDÉ DE FABRICATION DE LA TÔLE D'ACIER ENDUITE DE RÉSINE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.06.2008 JP 2008146119**

(43) Date of publication of application:
**09.03.2011 Bulletin 2011/10**

(73) Proprietor: **Toyo Kohan Co., Ltd.**
**Tokyo 102-8447 (JP)**

(72) Inventors:
• **OKAMURA, Takaaki**
**Kudamatsu-shi**
**Yamaguchi 744-8611 (JP)**

• **TOGO, Hiroaki**
**Kudamatsu-shi**
**Yamaguchi 744-8611 (JP)**

(74) Representative: **Vossius & Partner**
**Siebertstrasse 4**
**81675 München (DE)**

(56) References cited:
JP-A- 4 314 535    JP-A- 4 314 535
JP-A- 2003 034 322    JP-A- 2003 034 322
JP-A- 2004 098 552    JP-A- 2004 098 552
JP-A- 2007 130 678    JP-A- 2007 130 678

## Description

Field of the Invention

The present invention relates to a resin-coated steel plate and a manufacturing method thereof, and more particularly to a resin-coated steel plate suitable for forming a drawn and ironed can whose barrel portion exhibits excellent brightness by dry lubrication without using a liquid coolant and a manufacturing method of the resin-coated steel plate.

Description of the Related Art

As a side-wall seamless can (or seamless can), conventionally, there has been known a drawn and ironed can (DI can) having a thin-wall barrel portion. The drawn and ironed can is manufactured as follows. That is, a metal material such as an aluminum sheet or a tin plate is subject to drawing between a drawing die and a punch in at least one stage thus forming a cup which is constituted of a barrel portion having no seam on a side surface thereof and a bottom portion integrally joined to the barrel portion without a seam. Then, when desired, ironing is applied to the barrel portion by allowing the barrel portion to pass between an ironing punch and a die so that the barrel portion of the can becomes thin.
In forming the metal material into the seamless can by drawing/ironing, a liquid coolant is used in general for lowering friction between a resin-coated metal plate and a tool. Further, forming of a resin-coated metal plate into the seamless can by drawing/ironing is also performed in a dry state by applying wax or the like as a lubricant. However, to realize such ironing of the resin-coated metal plate in such a dry state, the resin-coated metal plate is required to withstand severe forming.
There has been proposed a coated metal plate which enables drawing and ironing under such a dry condition, and an amount of coating film on a surface of the sheet plate, a plating condition and a film thickness for drawing and ironing under the dry condition have been studied in patent document 1.
Patent document 1: JP-A-2003-34322

Summary of the Invention

Recently, there arises a strong demand for a drawn and ironed can which possesses appearance having brightness as a can property. The coated metal plate described in the above-mentioned patent document 1 does not take a condition on a material for acquiring brightness and hence, as a matter of course, patent document 1 completely fails to describe specific contents of conditions and a range which are considered necessary for acquiring brightness which the inventors of the present invention aim at. Although the coated metal plate described in patent document 1 uses an aluminum plate which may produce brightness more easily compared to a steel plate, it is hardly conceivable that the coated metal plate described in patent document 1 produces a can which exhibits appearance having brightness. Even if the coated metal plate described in patent document 1 may obtain a can which exhibits appearance having slight brightness, when the steel plate is used as the metal plate in place of aluminum, it is extremely difficult to form a seamless can which exhibits appearance having brightness.
Accordingly, it is an object of the present invention to provide a resin-coated steel plate capable of forming a seamless can which exhibits appearance having brightness stably and a manufacturing method of the resin-coated steel plate.
It is another object of the present invention to provide a resin-coated steel plate which can cope with drawing and ironing under dry lubrication and a manufacturing method of the resin-coated steel plate.

Means for solving the problem

According to one aspect of the present invention, there is provided a resin-coated steel plate according to claim 1 used for forming a drawn and ironed can which includes: a steel plate; a first tin plating layer which is formed on a surface of the steel plate which becomes an outer surface of the can and has a free tin amount of #20 to #150; a first resin layer which is formed on the first tin plating layer and has a thickness of 0.01 to 3.0 $\mu$m; and a second resin layer which is formed on a surface of the steel plate which becomes an inner surface of the can and has a thickness of 10 to 50$\mu$m, wherein a second tin plating layer which has a free tin amount of #2 to #16 is formed between the steel plate and the second resin layer.
The resin-coated steel plate may also preferably be configured as follows.

    1. The first resin layer has Marten's hardness of 50N/mm$^2$ at a temperature of 25°C.
    2. Glass transition temperature of the first resin layer is not lower than 20°C.
    3. An arithmetic average coarseness (Ra) of a surface of the first tin plating layer is not more than 0.15$\mu$m.

In the present invention, the free tin amount is a value measured by an electrolytic stripping method used in a tin adhesion amount testing method of tin plate stipulated in JIS G 3303-2998.

Further, in the present invention, Marten's hardness is a value which is obtained by measuring Marten's hardness of the resin layer at a maximum weight which satisfies a condition that a pushing depth of a Berkovich indenter is not more than 1/10 of a thickness of a measure coated film in accordance with ISO 14577-2002 using a micro extrusion hardness tester ENT-1100A manufactured by ELONIX KK. Further, as the Berkovich indenter, an indenter in which a correction length ($\Delta$hc) indicative of wear of the indenter is set to a value not more than 15nm is used. When a thickness of the resin layer formed on the steel plate which is used as a sample and forms the tin plating layer thereon is less than 1$\mu$m, there exists a possibility that a measured value is largely influenced by a surface state of the resin layer. Accordingly, in this case, the measured value may be substituted by a value obtained by measuring Martin's hardness of a resin layer of a sample in which a resin layer having a thickness of 1$\mu$m is formed on the same steel plate using the same resin and under the substantially equal condition.

Further, the glass transition temperature in the present invention is a value measured by setting the resin layer treated in the present invention as an object to be measured in accordance with JIS C 6481-1996 using a TMA device TAS-300 made by RIGAKU DENKI Co., Ltd.

Further, in the present invention, the arithmetic average coarseness (Ra) is a value measured in accordance with JIS B 0601-1994.

According to another aspect of the present invention, there is provided a method of manufacturing a resin-coated steel plate according to claim 5 which includes the steps of: forming a first tin plating layer having a free tin amount of #20 to #150 on one surface of a steel plate which becomes an outer surface of the can; forming a first resin layer having a thickness of 0.01 to 3.0$\mu$m on the first tin plating layer; and forming a second resin layer having a thickness of 10 to 50$\mu$m on a surface of the steel plate which becomes an inner surface of the can.

In the method of manufacturing a resin-coated steel plate according to the present invention, as one of methods for further enhancing the brightness, the steel plate may preferably be heated to a temperature not lower than a melting point of tin after forming the first resin layer. However, such a brightness enhancing method increases the number of steps and hence, it is necessary to determine whether or not such a method should be adopted by taking required brightness and economy into consideration.

According to the resin-coated steel plate of the present invention, even when the drawing and ironing are performed under a dry condition, it is possible to stably manufacture the drawn and ironed can (DI can) without producing metal powder or the like.

Further, according to the resin-coated steel plate of the present invention, a barrel portion of the obtained drawn and ironed can exhibits excellent brightness as well as excellent corrosion resistance.

Preferred Embodiments of the Present Invention

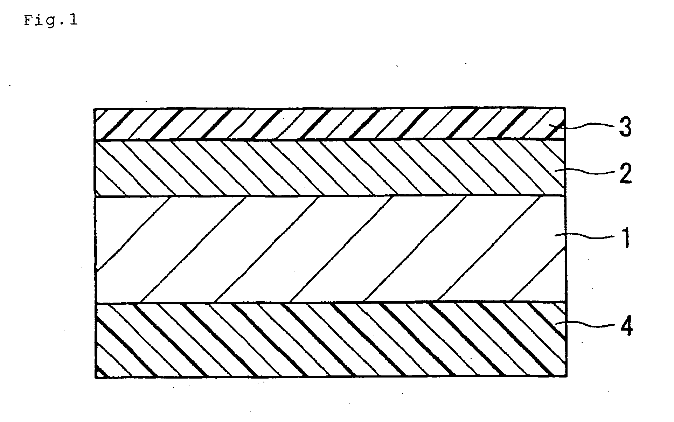

A resin coated steel plate according to the present invention is a resin-coated steel plate used in forming a drawn and ironed can. The gist of the resin coated steel plate according to the present invention lies in that, as can be understood from the cross-sectional structure of the resin-coated steel plate shown in Fig. 1, a first tin plating layer 2 having a free tin amount of #20 to #150 is formed on a surface of a steel plate 1 which constitutes an outer surface of the can, and a first resin layer 3 having a thickness of 0.01 to 3.0$\mu$m is formed on the first tin plating layer 2, and a second resin layer 4 having a thickness of 10 to 50$\mu$m is formed on a surface of the steel plate 1 which constitutes an inner surface of the can.

In the resin coated steel plate, it is difficult to suppress the generation of a rough surface caused by the deformation of crystal grains on a surface of iron due to drawing and hence, a drawn and ironed can which has excellent brightness cannot be obtained. According to the present invention, inventors of the present invention have found that by forming a tin layer which has malleability on the surface of the steel plate which constitutes the outer surface of the can such that the free tin amount falls within the above-mentioned range and, at the same time, by forming a resin layer having a thickness which falls within the above-mentioned range on the tin layer, ironing of the tin layer and the like is facilitated and hence, a surface smoothing action by ironing can be effectively acquired thus forming a drawn and ironed can which exhibits appearance having excellent brightness.

It is also apparent from results of examples described later that the resin-coated steel plate according to the present invention exhibits excellent formability in drawing and ironing and can form a drawn and ironed can having excellent brightness and corrosion resistance (examples 1 to 16).

That is, according to the present invention, it is important that the free tin amount of the tin layer formed on the surface of the steel plate which constitutes the outer surface side of the can falls within the above-mentioned range with respect to brightness of the manufactured can. When the free tin amount is smaller than the above-mentioned range, as apparent from a result of a comparison example 1 described later, the regular reflectance is low and hence, the drawn and ironed can cannot have excellent brightness. On the other hand, when the free tin amount is larger than the above-mentioned range, there exists a tendency that the surface roughness is increased resulting in lowering of the regular reflectance.

Further, it is also important that the thickness of the first resin layer formed on the tin layer falls within the above-mentioned range with respect to the brightness and the formability of the obtained can. When the thickness of the resin layer is smaller than the above-mentioned range, there may be a case where the metal surface is shaved so that metal powder is produced and pin holes are formed in an inner surface of the can attributed to this metal powder resulting in leaking of liquid (comparison example 2). On the other hand, when the thickness of the resin layer is larger than the above-mentioned range, the can exhibits the poor brightness even when the tin layer whose free tin amount falls within the above-mentioned range is formed (comparison example 3).

Further, according to the present invention, to allow the manufactured drawn and ironed can to perform a function as a container for preserving a content, it is important that the thickness of the second resin layer formed on the surface which constitutes the inner surface of the can falls within the above-mentioned range. When the thickness of the resin layer is smaller than the above-mentioned range, there may be a case that defective coating is formed leading to leaking of liquid (comparison example 4). On the other hand, when the thickness of the resin layer is larger than the above-mentioned range, the further improvement of the quality of the can cannot be expected and hence, the excessive thickness of the resin layer merely brings about a disadvantage economically.

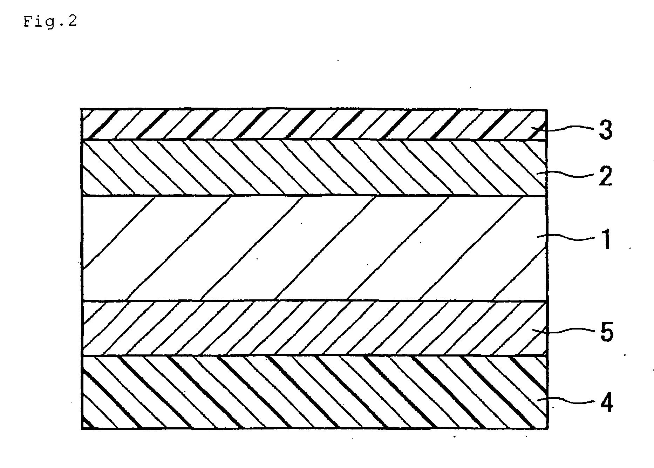

Further, in the resin-coated steel plate of the present invention, particularly from a viewpoint of a performance of preserving a content in the can, that is, corrosion resistance of the can, in addition to the basic structure shown in Fig. 1, as shown in Fig. 2, a second tin plating layer 5 whose free tin amount falls within a range from #2 to #16 is formed between the surface of the steel plate 1 which constitutes a can-inner-side surface and the second resin layer 4. Here, even when the free tin content is larger than the above-mentioned range, the further enhancement of the corrosion resistance is not expected and hence, the excessive increase of the free tin amount brings about a disadvantage economically. Accordingly, it is desirable that the free tin amount of the second tin layer falls within the above-mentioned range.

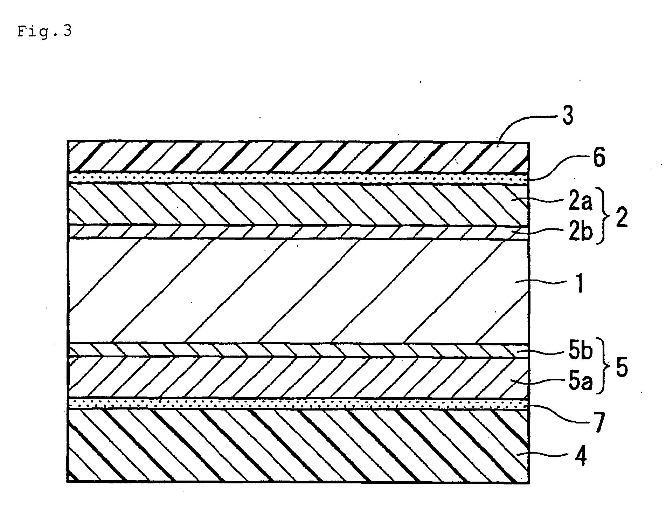

Further, in the resin-coated steel plate of the present invention, as shown in Fig. 3, a portion of the first tin plating layer 2 and a portion of the second tin plating layer 5 may be formed into an alloy by reflow treatment so that the first tin plating layer 2 is constituted of a first tin layer 2a and an iron-tin alloy layer 2b and second tin plating layer 5 is constituted of a second tin layer 5a and an iron-tin alloy layer 5b. Further, depending on a usage of the resin-coated steel plate, a post treatment layer 6, 7 described later which is formed by chromating or the like may be formed on the first tin plating layer 2 and the second tin plating layer 5.

(Steel plate)

As a steel plate which can be used for forming the resin-coated steel plate of the present invention, a steel plate which has been conventionally used in the manufacture of a drawn and ironed can be used. On the other hand, various kinds of steel plates can be suitably used depending on usage or application. For example, it is possible to use a cold-rolled steel plate having a plate thickness ranging from 0.15 to 0.3mm which is manufactured by applying cold rolling to a hot rolled plate made of alumina killed steel and, thereafter, applying temper rolling to the rolled steel after annealing. It is also possible to use a cold-rolled steel plate having a plate thickness ranging from 0.15 to 0.3mm which is manufactured by applying cold rolling to a hot rolled plate made of alumina killed steel and, thereafter, applying cold rolling again to the rolled steel after annealing for increasing a strength of the rolled plate or the like.

To set arithmetic average surface roughness (Ra) of the surface of the first tin plating layer to a value not more than 0. 15$\mu$m, it may be possible to adopt a method which adjusts the degree of coarseness of a reduction roll used in the manufacture of a steel plate or the like.

(Tin plating layer)

As mentioned previously, it is important that the free tin amount of the first tin plating layer falls within a range from #20 to #150. The free tin amount can be adjusted to a value within such a range by adjusting tin plating amount (tin coated amount), reflow conditions (temperature, time) and the like. In this specification, # used for indicating the free tin amount is a symbol used in expressing an amount of tin in a tin plate in general, wherein #1 indicates a tin amount of 0.112g/m$^2$ and the tin amount is proportional to numeral affixed to #.

Accordingly, #20 indicates a tin amount of 2.24g/m$^2$, and #150 indicates a tin amount of 16.8g/m$^2$. Further, it is preferable that the arithmetic average surface roughness (Ra) of the surface of the first tin plating layer is not more than 0.15$\mu$m from a viewpoint of brightness. That is, when the arithmetic average surface roughness (Ra) exceeds 0.15$\mu$m so that the surface of the first tin plating layer is coarse, the resin layer in valley portions is entangled at the time of ironing thus deteriorating surface smoothness of the resin-coated steel plate resulting in lowering of regular reflectance, that is, brightness of the resin-coated steel plate.

With respect to the second tin plating layer which is formed when necessary, the second tin plating layer is formed in the same manner as the first tin plating layer except for that the free tin amount of the second tin plating layer ranges from #2 to #16.

(First resin layer)

According to the present invention, it is preferable that Martin's hardness at a temperature of 25°C of the first resin layer formed on the first tin plating layer is not less than 50N/mm$^2$. By setting Martin' s hardness of the first resin layer to such a value, a smoothing effect of the tin plating layer by way of the resin layer can be enhanced and hence, it is possible to enhance regular reflectance, that is, brightness of the drawn and ironed can.

To form the resin layer which exhibits Martin's hardness of 50N/mm$^2$ at a temperature of 25°C, for example, polyester having the rigid molecular structure as resin content or a crosslink-type resin such as a urethane-acrylate-based UV paint can be used. Further, the resin layer may be prepared by blending a hard resin and a soft resin.

Further, according to the resin-coated steel plate of the present invention, when the first resin layer is of a non-crosslink type and an inorganic filler such as silica is not added in the first resin layer, it is preferable to set the glass transition temperature of the first resin layer to a temperature not lower than 20°C, and more particularly to a temperature not lower than 70°C. By setting the glass transition temperature of the first resin layer to such a temperature, a smoothing effect of the tin plating layer by way of the resin layer can be enhanced and hence, it is possible to enhance regular reflectance, that is, brightness of the manufactured drawn and ironed can.

However, when a cross-linking agent or inorganic filler such as silica of nano order is added to the first resin layer, it is not always necessary to set a lower limit of the proper glass transition temperature to 20°C and may be set to a temperature below 20°C. Accordingly, the proper glass transition temperature of the resin should be determined by taking a kind and an amount of the cross-linking agent or the inorganic filler into consideration.

A resin which is used for forming the first resin layer of the resin-coated steel plate of the present invention constitutes a protective layer of the drawn and ironed can and hence, it is desirable that the first resin layer has following properties. That is, the resin layer per se receives the severe ironing and hence, it is desirable that the resin layer can be elongated to some extent. Particularly, it is desirable that the resin layer has the elongation after fracture of not less than 5% at a temperature of 25°C when measured in accordance with ASTM D-882. Further, it is desirable that there is no change in appearance due to corrosion of the steel plate. Particularly, it is desirable that water absorption measured in accordance with ASTM D-570-63 (at 23 degrees for 24 hours) is not more than 15%. Further, it is desirable that the resin layer exhibits the excellent adhesiveness to a metal material and, more particularly, the excellent thermal adhesiveness to the metal material. It is also preferable that concentration of a carbonyl group in the resin is not less than 100meq/100g resin.

Following resins may be used as the resin for forming the first resin layer of the present invention. However, the resin for forming the first resin layer of the present invention is not limited to those resins.

That is, a polyester group such as polyethylene terephthalate, polyethylene terephthalate/isophthalate, polytetra methylene terephthalate, polyethylene/ tetra methylene terephthalate, polytetra methylene terephthalate/isophthalate, polytetra methylene/ ethylene terephthalate, polyethylene/ tetra methylene terephthalate/ isophthalate, polyethylene/ oxybenzoate or a blended material of these resins; polycarbonate group such as poly-p-xylene glycol biscarbonate, poly-dioxydiphenyl methane carbonate, poly-dioxydiphenol 2, 2-propane carbonate, poly-dioxydiphenyl 1, 1-ethane carbonate; polyamide group such as poly-ω-aminocaproic acid, poly-ω-aminoheptanoic acid, poly-ω-aminocaprylic acid, poly-ω-pelargonic acid, poly-ω-aminodecanoic acid, poly-ω-aminoundecanoic acid, poly-ω-aminododecanoic acid, poly-ω-aminotridecanoic acid, polyhexamethylene adipamide, polyhexamethylene sebacamide, polyhexamethylene dodecamide, polyhexamethylene tridecamide, polydecamethylene adipamide, polydecamethylene sebacamide, polydecamethylene dodecamide, polydecamethylene tridecamide, polydodecamethylene adipamide, polydodecamethylene sebacamide, polydodecamethylene dodecamide, polytridecamethylene adipamide, polytridecamethylene sebacamide, polytridecamethylene dodecamide, polydodecamethylene azelamide, polytridecamethylene azelamide, or copolyamide of these resins; polyamidimide resin, acrylic resin, urethane acrylate resin, epoxy resin or the like may be used as the resin for forming the first resin layer. These resins may be also used in a form of a blended material or in a form of the stacked structure.

The first resin layer of the resin coated steel plate of the present invention can be formed by coating a paint which is formed by dissolving a resin content in a solvent, an aqueous dispersion agent in which a resin content is dispersed, or a ultraviolet-curing-type paint which contains 10% of solid content or by adhering a cast film, or by directly coating a resin by extrusion.

(Second resin layer)

In the present invention, the second resin layer which is formed on the surface of the steel plate which constitutes the inner-surface-side surface or on the second tin plating layer which is formed when necessary can be formed using the same material and the same method as the first resin layer. However, the second resin layer is brought into contact with a content of the can and hence, it is also necessary to pay attention to barrier property against metal corroding content in the content. That is, it is necessary to determine a resin to be applied by taking a content filled in the can and a preservation period. As the resin which can be preferably used by taking these matters into consideration, polyester, particularly ethylene-terephthalate-based polyester which contains an isophthalic acid as a copolymer content is named.

(Manufacturing method of resin-coated steel plate)

The resin-coated steel plate of the present invention can be formed by the manufacturing method which includes: a step in which a first tin plating layer is formed on one surface of a steel plate such that a free tin amount becomes #20 to #150; a step in which a first resin layer having a thickness of 0.01 to 3.0μm is formed on the first tin plating layer; and a step in which a second resin layer having a thickness of 10 to 50μm is formed on another surface of the steel plate.

As pretreatment necessary for the formation of the tin plating layer, a known method such as alkaline electrolytic cleaning, acid cleaning or the like is applicable.

Next, the first tin plating layer is formed on the steel plate and, when necessary, the second tin plating layer is formed on the steel plate. The tin plating layer is formed on the above-mentioned steel plate as follows. That is, the tin plating layer is formed on the above-mentioned steel plate by electroplating using a known Ferrostan bath or halogen bath. Alternatively, a tin plating layer having a normal luster surface is formed on the above-mentioned steel plate such that a tin plating layer is formed on the steel plate by electroplating, the steel plate is heated at a temperature equal to or more than a melting point of tin, and the steel plate is quenched in water after tin is melted (reflow treatment).

As mentioned previously, it is important that the free tin amount of the first tin plating layer falls within a range from #20 to #150, and the adjustment of free tin amount can be performed by adjusting tin plating amount (tin coated amount), reflow conditions (temperature, time) and the like.

Further, it is preferable that the arithmetic average roughness of the surface of the first tin plating layer is set to not more than 0.15μm. As mentioned previously, the above range can be adjusted by adjusting the tin plating condition in addition to the adjustment of the coarseness of the using steel plate.

In forming the second tin plating layer when necessary, the second tin plating layer is formed in the same manner as the first tin plating layer while adjusting the free tin amount to a value which falls within a range from #2 to #16.

Further, a post-treatment (surface treatment) layer may be formed on the first tin plating layer and the second tin plating layer from a viewpoint of enhancing adhesiveness between the first resin layer and the first tin plating layer and adhesiveness between the second resin layer and the second tin plating layer.

As such surface treatment, immersion treatment which immerses the tin plating layer in an aqueous solution of dichromate salt, a method which forms a chromium hydrous oxide film on the tin plating layer by electrolytic treatment, a method which forms a two-layered film made of metal chromium and chromium hydrous oxide on the tin plating layer by electrolytic treatment in an aqueous solution of chromic anhydride, a method which forms a thin film made of an organic resin such as a polyacrylic acid or an epoxy resin on the tin plating layer, a method which applies silane coupling treatment to the tin plating layer are considered. These surface treatments can be performed by a conventionally known method.

After forming the first tin plating layer and, when necessary, forming the second tin plating layer, a first resin layer having a thickness of 0.01 to 3.0 μm is formed on the first tin plating layer and, at the same time, a second resin layer having a thickness of 10 to 50μm is formed on another surface of the steel plate.

In forming the first resin layer by coating paint, the first resin layer may be formed by a conventionally known coating method such as roll coater coating including gravure coater coating, spray coating or the like. The adjustment of thickness of the coated film may be conducted by adjusting a coating amount or an amount of solvent or resin content in paint or the like. Further, when a gravure coater is used in coating, the adjustment of thickness of the coated film may be conducted by adjusting roughness of meshes of gravure or the like.

Further, the first resin layer may be also formed by adhering a preformed cast film to a steel plate by thermal adhesion or the like or by directly coating a resin on the steel plate by extrusion.

According to the present invention, it is desirable to heat the steel plate to a temperature not lower than a melting point of tin after forming the first resin layer from a viewpoint of brightness. However, there exists a possibility that this heating pushes up a manufacturing cost due to the increase of steps and hence, it is necessary to determine whether or not the heating is performed by taking economy and requested properties into consideration. It is considered that by reheating the resin-coated metal plate to a temperature not lower than a melting point of tin after forming the first resin layer, the first resin layer and the first tin plating layer can be brought into more uniform contact and hence, brightness of the resin-coated metal plate can be enhanced eventually.

The second resin layer can be formed simultaneously with the formation of the first resin layer, or the second resin layer can be formed before or after the formation of the first resin layer. However, the selection of the respective resin layers and the resin forming method should be determined such that no defective appearance occurs on the first resin layer or the second resin layer due to adhesion of the first resin layer or the second resin layer to a roll.

In forming the second resin layer on the steel plate by a resin film, in the same manner as the first resin layer, the second resin layer can be formed by coating of paint or by an extrusion coating method besides the adhesion of a cast film by thermal adhesion.

The resin-coated steel plate of the present invention can be preferably used in forming the conventionally known drawn and ironed can. It is possible to form the resin-coated steel can with favorable formability also under a dry condition without using a coolant, not to mention, under a condition which uses a liquid coolant.

That is, a blank which is punched out from the resin-coated steel plate of the present invention is drawn into a cup-shaped body using drawing dies in one stage or in plural stages. Next, using ironing dies in one stage or plural stages, ironing for increasing a height of a barrel portion of the cup-shaped body while decreasing a wall thickness of the barrel portion of the cup-shaped body is applied to the cup-shaped body in such a manner that the barrel portion is forcibly pushed into a clearance portion between the ironing die and a punch which is set smaller than a thickness of the barrel portion of the cup-shaped body. In this manner, it is possible to form a relatively-small-diameter drawn and ironed can (DI can) whose barrel portion has a large height and a small wall thickness.

[Examples]

(Estimation method)

[Regular reflectance of barrel portion]

A barrel portion having a width of 20mm which is arranged at a position 60mm away from a can bottom of the formed drawn can is cut off in the circumferential direction, and the cut barrel portion having a width of 20mm is divided into eight pieces in the can height direction thus preparing measuring samples. A total reflectance and a diffuse reflectance of a center portion of each measuring sample are measured using a spectrophotometric colorimetry meter (made by Konica Minolta Holdings, Inc., Type: CM-3500), and regular reflectance is calculated using a following formula.

$$\text{Regular reflectance(\%) = total reflectance(\%) - diffuse reflectance (\%)}$$

An average value of regular reflectances of eight divided samples is calculated by dropping the fractional portion of the value and is used as the barrel-portion regular reflectance in the present invention.

It is determined that the resin-coated steel plate is practically usable when the regular reflectance is not less than 10%.

[Leaking of liquid]

A portion of the barrel of the can obtained by drawing and ironing is cut in the circumferential direction using a position 2mm lower than a lowest portion of an undulated upper end of the barrel portion as a starting point, and the upper portion of the barrel portion is removed thus allowing the can to have a constant height. Thereafter, flange forming is applied to the can and a content (Coca Cola: registered trademark) is filled in the can such that the content reaches 90% of the total height of the can. An aluminum lid to which epoxy phenolic-based coating material is coated by baking with a thickness after drying of $10\mu$m is seamed to the can. With a lid surface of each aluminum lid arranged up-side-down, 100 pieces of these cans are left under respective atmospheres of 37°C and 50°C for 6 months, and the number of cans which exhibits leaking of liquid in the respective atmospheres are checked. Although the most favorable case may be a case where no cans exhibit leaking of liquid even when the cans are left under the atmosphere of 50°C for 6 months, it is determined the cans are practically usable in a case where no cans exhibit leaking of liquid even when the cans are left under the atmosphere of 37°C for 6 months.

[Flavor]

Contents of the cans which are left for 6 months under respective atmospheres of 37°C and 50°C for 6 months are sampled, and flavors of contents in all cans are checked by 30 people. When more than three people perceive flavor abnormality even with respect to one can out of cans formed of respective kinds of coated metal plates, it is determined that the flavor is abnormal, while when the number of people who perceive such flavor abnormality is less than three, it is determined that the flavor is favorable. Although the most favorable case may be a case where cans exhibit favorable flavor even when the cans are left under the atmosphere of 50°C, it is determined the cans are practically usable in a case where cans exhibit favorable flavor even when the cans are left under the atmosphere of 37°C for 6 months.

(Embodiment 1)

A first tin plating layer having free tin amount of #20 (Ra=0.12μm) is formed on a surface of a soft steel plate (plate thickness: 0.19mm, temper: T-1) which constitutes an outer surface of a can. Then, a second tin plating layer having free tin amount of #10 (Ra=0. 12μm) is formed on another surface of the soft steel plate which constitutes an inner surface of the can. The soft steel plate is heated until a plate temperature reaches 220°C, a non-stretched copolymer polyester film (melting point=210°C, film thickness=28μm) made by Toyo Kohan Co., Ltd. is applied to a surface of the metal plate which constitutes the inner surface of the can by coating and is cooled. Thereafter, a copolymer polyester paint (product name: VYLON-1400) made by TOYOBO Co., Ltd. is applied to a surface of the metal plate which constitutes an outer surface of the can by painting and, thereafter, the metal plate is dried under atmosphere of 150°C for 10 minutes thus manufacturing a resin-coated steel plate having a coated film whose thickness after drying is 1μm.

50mg/m² of glamour wax is applied to both surfaces of the resin-coated steel plate by coating and, thereafter, drawing and ironing are applied to the resin-coated steel plate in dry atmosphere under following forming conditions such that the inner surface of the can becomes the surface coated with a copolymer polyester film made by Toyo Kohan CO., Ltd. thus manufacturing a drawn and ironed can.

Properties of the drawn and ironed can, that is, regular reflectance of an outer surface of the can, leaking of liquid after a lapse of time from filling of liquid, and flavor of content are evaluated using the above-mentioned evaluation methods. A result of the evaluations is shown in Table 1. It is found that even when the can is left under 50°C for 6 months after content is filled in the can, no leaking of liquid is observed, and flavor of the content is favorable and hence, the can exhibits can-properties which prove that the can withstand the practical use. Further, a barrel portion of the can exhibits high regular reflectance so that the can obtains appearance of high brightness.

<Drawing and ironing condition>

1. Forming temperature: temperature of punch immediately before forming: 55°C
2. Die temperature: 20°C
3. Flank diameter: 151mm
4. Drawing condition: 1st drawing ratio: 1.66, 2nd drawing ratio: 1.38
5. Ironing punch diameter: 66mm
6. Total ironing ratio: 63%

(Examples 2 to 9 and 13 to 15)

Except for that the free tin quantities of the first tin plating layer and the second tin plating layer, the thicknesses of the first resin layer and the second resin layer, and Ra of the first tin plating layer are set to values shown in Table 1, using resin-coated steel plates which are manufactured in the same manner as the first embodiment, drawing and ironing are performed under forming conditions substantially equal to the forming conditions of the example 1 thus manufacturing drawn and ironed cans.

Properties of these drawn and ironed cans are shown in Table 1. From Table 1, it is found that even when the cans are left under 37°C and 50°C for 6 months after content is filled in the cans, and leaking of liquid is observed in no cans. All cans exhibit good flavor at least in the case where the cans are left for 6 months under 37°C. All can exhibit can-properties which prove that the cans withstand the practical use. Further, barrel portions of the cans exhibit high regular reflectance so that the cans obtain appearance of high brightness.

[Examples 10 to 12]

Except for that a copolymer polyester paint (made by TOYOBO Co., Ltd., product name: VYLONAL MD1480) is applied to a surface of the resin-coated steel plate which becomes an outer surface of a can in the example 10, and a copolymer polyester paint (made by TOYOBO Co., Ltd., product name: VYLONAL MD1500) is applied to a surface of the resin-coated steel plate which becomes an outer surface of a can in the examples 11 and 12, and the free tin quantities of the first tin plating layer and the second tin plating layer, and the thicknesses of the first resin layer and the second resin layer are set to values shown in Table 1 in all of the examples 10 to 12, using resin-coated steel plates which are manufactured in the same manner as the first embodiment, drawing and ironing are performed under forming conditions substantially equal to the forming conditions of the example 1 thus manufacturing drawn and ironed cans.

Properties of these drawn and ironed cans are shown in Table 1. From Table 1, it is found that even when the cans are left under 37°C and 50°C for 6 months after content is filled in the cans, leaking of liquid is observed in no cans. All cans exhibit favorable flavor under both temperatures. All can exhibit can-properties which prove that the cans withstand the practical use. Further, barrel portions of the cans exhibit high regular reflectance so that the cans obtain appearance of high brightness.

[Example 16]

Except for that the free tin quantities of the first tin plating layer and the second tin plating layer, and the thicknesses of the first resin layer and the second resin layer are set to values shown in Table 1, and chromating having a chromium amount of $4mg/m^2$ is applied to the first tin plating layer and the second tin plating layer as post treatment after the formation of the first tin plating layer and the second tin plating layer, using resin-coated steel plates which are manufactured in the same manner as the first embodiment, drawing and ironing are performed under forming conditions substantially equal to the forming conditions of the example 1 thus manufacturing drawn and ironed cans.

Properties of these drawn and ironed cans are shown in Table 1. From Table 1, it is found that even when the cans are left under 37°C and 50°C for 6 months after content is filled in the can, leaking of liquid is observed in no cans. All cans exhibit favorable flavor under both temperatures. All can exhibit can-properties which prove that the cans withstand the practical use. Further, barrel portions of the cans exhibit high regular reflectance so that the cans obtain appearance of high brightness.

(Comparison examples 1 to 4)

Except for that the free tin quantities of the first tin plating layer and the second tin plating layer, and the thicknesses of the first resin layer and the second resin layer are set to values shown in Table 1, using resin-coated steel plates which are manufactured in the same manner as the first embodiment, drawing and ironing are performed under forming conditions substantially equal to the forming conditions of the example 1 thus manufacturing drawn and ironed cans.

Properties of these drawn and ironed cans are shown in Table 2. From Table 2, it is found that these examples cannot obtain the drawn and ironed cans which satisfy all of brightness, formability (leaking of liquid) and flavor property.

[Table 1]

| Embodiment | Tin-plating layer | | | Resin layer | | | | Re-heating | Characteristics of formed can | | | | |
|---|---|---|---|---|---|---|---|---|---|---|---|---|---|
| | First tin-plating layer | | Second tin-plating layer | First resin layer | | | Second resin layer | | Regular reflectance of body portion | liquid spill (%) | | Flavor | |
| | Ra (μm) | Amount of free tin | Amount of free tin | Tg (°C) | Hardness (N/mm2) | Thickness (μm) | Thickness (μm) | | | 37°C | 50°C | 37°C | 50°C |
| 1 | 0.12 | #20 | #10 | 83 | 266 | 0.01 | 28 | None | 22 | 0 | 0 | Good | Good |
| 2 | 0.12 | #80 | #10 | 83 | 265 | 0.1 | 28 | None | 46 | 0 | 0 | Good | Good |
| 3 | 0.12 | #150 | #10 | 83 | 265 | 0.1 | 28 | None | 47 | 0 | 0 | Good | Good |
| 4 | 0.12 | #80 | #10 | 83 | 265 | 1 | 28 | None | 24 | 0 | 0 | Good | Good |
| 5 | 0.12 | #80 | #10 | 83 | 205 | 3 | 21 | None | 13 | 0 | 0 | Good | Good |
| G | 0.12 | #80 | #10 | 83 | 265 | 0.5 | 10 | None | 32 | 0 | 0 | Good | Good |
| 7 | 0.12 | #80 | #10 | 83 | 265 | 0.5 | 50 | None | 33 | 0 | 0 | Good | Good |
| 8 | 0.12 | #80 | #2 | 83 | 265 | 0.5 | 28 | None | 32 | 0 | 0 | Good | Good |
| 9 | 0.12 | #80 | #16 | 83 | 265 | 0.6 | 28 | None | 32 | 0 | 0 | Good | Good |
| 10 | 0.12 | #20 | #10 | 20 | 50 | 0.5 | 28 | None | 12 | 0 | 0 | Good | Good |
| 11 | 0.12 | #80 | #10 | 77 | 205 | 0.5 | 28 | None | 27 | 0 | 0 | Good | Good |
| 12 | 0.12 | #80 | #10 | 77 | 205 | 0.5 | 28 | Re-heated | 33 | 0 | 0 | Good | Good |
| 13 | 0.15 | #80 | #10 | 83 | 265 | 0.5 | 28 | None | 32 | 0 | 0 | Good | Good |
| 14 | 0.18 | #80 | #10 | 83 | 265 | 0.5 | 28 | None | 28 | 0 | 0 | Good | Good |
| 15 | 0.12 | #80 | #1.8 | 83 | 265 | 0.5 | 28 | None | 32 | 0 | 0 | Good | Bad |
| 16 | 0.12 | #80 | #10 | 83 | 265 | 0.6 | 28 | None | 32 | 0 | 0 | Good | Good |

[Table 2]

| Embodiment | Tin-plating layer | | | Resin layer | | | | Re-heating | Characteristics of formed can | | | | |
|---|---|---|---|---|---|---|---|---|---|---|---|---|---|
| | First tin-plating layer | | Second tin-plating layer | First resin layer | | | Second resin layer | | Regular reflectance of body portion | Liquid spill (%) | | Flavor | |
| | Ra (μm) | Amount of free tin | Amount of free tin | Tg (°C) | Hardness (N/mm2) | Thickness (μm) | Thickness (μm) | | | 37°C | 50°C | 37°C | 50°C |
| 1 | 0.12 | #15 | #10 | 83 | 265 | 0.01 | 28 | None | 9 | 0 | 0 | Good | Good |
| 2 | 0.12 | #80 | #10 | 83 | 265 | 0.007 | 28 | None | 51 | 2 | 18 | Bad | Bad |
| 3 | 0.12 | #150 | #10 | 83 | 265 | 4.0 | 28 | None | 8 | 0 | 0 | Good | Good |
| 4 | 0.12 | #80 | #10 | 83 | 265 | 1.0 | 8 | None | 21 | 2 | 27 | Bad | Bad |

Brief Explanation of Drawings

Fig. 1 is a view showing one example of the cross-sectional structure of a resin-coated steel plate of the present invention;

Fig. 2 is a view showing another example of the cross-sectional structure of a resin-coated steel plate of the present invention; and

Fig. 3 is a view showing still another example of the cross-sectional structure of a resin-coated steel plate of the present invention.

Explanation of letters or numerals

1: A steel plate
2: A first tin plating layer
3: A first resin layer
4: A second resin layer
5: A second tin plating layer
6, 7: A post-treatment layer

**Claims**

1. A resin-coated steel plate used for forming a drawn and ironed can, the resin-coated steel plate comprising:

   a steel plate;
   a first tin plating layer which is formed on a surface of the steel plate which becomes the outer surface of the can and has a free tin amount of #20 to #150;
   a first resin layer which is formed on the first tin plating layer and has a thickness of 0.01 to 3.0$\mu$m; and
   a second resin layer which is formed on the surface of the steel plate which becomes the inner surface of the can and has a thickness of 10 to 50$\mu$m, wherein a second tin plating layer which has a free tin amount of #2 to #16 is formed between the steel plate and the second resin layer; the free tin amount being a value measured by an electrolytic stripping method used in a tin adhesion amount testing method of tin plate stipulated in JIS G 3303-2998.

2. A resin-coated steel plate according to claim 1, wherein the first resin layer has a Marten's hardness of 50N/mm$^2$ at a temperature of 25°C.

3. A resin-coated steel plate according to claim 1, wherein the glass transition temperature of the first resin layer is not lower than 20°C.

4. A resin-coated steel plate according to claim 1, wherein the arithmetic average coarseness of the surface of the first tin plating layer is not more than 0.15$\mu$m.

5. A method of manufacturing a resin-coated steel plate comprising the steps of:

   forming a first tin plating layer having a free tin amount of #20 to #150 on one surface of a steel plate;
   forming a second tin plating layer having a free tin amount of #2 to #16 on the other surface of the steel plate;
   forming a first resin layer having a thickness of 0.01 to 3.0$\mu$m on the first tin plating layer; and
   forming a second resin layer having a thickness of 10 to 50$\mu$m on the other surface of the steel plate;
   the free tin amount being a value measured by an electrolytic stripping method used in a tin adhesion amount testing method of tin plate stipulated in JIS G 3303-2998.

6. A method of manufacturing a resin-coated steel plate according to claim 5, wherein the steel plate is heated to a temperature not lower than the melting point of tin after forming the first resin layer.

**Patentansprüche**

1. Ein harzbeschichtetes Stahlblech, verwendet zum Formen einer gezogenen und abgestreckten Dose, wobei das harzbeschichtete Stahlblech:

   ein Stahlblech;
   eine erste Zinnplattierungsschicht, die auf einer Oberfläche des Stahlblechs, welche zur äußeren Oberfläche der Dose wird und eine Menge an freiem Zinn von #20 bis #150 aufweist, gebildet ist;
   eine erste Harzschicht, welche auf der ersten Zinnplattierungsschicht gebildet ist und eine Dicke von 0,01 bis 3,0 $\mu$m aufweist; und
   eine zweite Harzschicht umfasst, die auf der Oberfläche des Stahlblechs, welche zur inneren Oberfläche der Dose wird und eine Dicke von 10 bis 50 $\mu$m aufweist, gebildet ist, wobei eine zweite Zinnplattierungsschicht, welche eine Menge an freiem Zinn von #2 bis #16 aufweist, zwischen dem Stahlblech und der zweiten Harzschicht gebildet ist;
   wobei die Menge an freiem Zinn einen Wert darstellt, der durch ein elektrolytisches Strippverfahren gemessen wird, das in einem Verfahren zur Bestimmung der an Weißblech anhaftenden Zinnmenge, das im JIS G 3303-2998 vorgeschrieben ist, verwendet wird.

2. Ein harzbeschichtetes Stahlblech nach Anspruch 1, wobei die erste Harzschicht eine Martenshärte von 50N/mm$^2$ bei einer Temperatur von 25°C aufweist.

3. Ein harzbeschichtetes Stahlblech nach Anspruch 1, wobei die Glasübergangtemperatur der ersten Harzschicht nicht unter 20°C liegt.

4. Ein harzbeschichtetes Stahlblech nach Anspruch 1, wobei die arithmetische Durchschnittsrauheit der Oberfläche der ersten Zinnplattierungsschicht nicht mehr als 0,15 $\mu$m beträgt.

5. Ein Verfahren zur Herstellung eines harzbeschichteten Stahlblechs, umfassend die Schritte:

   Bilden einer ersten Zinnplattierungsschicht mit einer Menge an freiem Zinn von #20 bis #150 auf einer Oberfläche eines Stahlblechs;
   Bilden einer zweiten Zinnplattierungsschicht mit einer Menge an freiem Zinn von #2 bis #16 auf der anderen Oberfläche des Stahlblechs;
   Bilden einer ersten Harzschicht mit einer Dicke von 0,01 bis 3,0 $\mu$m auf der ersten Zinnplattierungsschicht; und
   Bilden einer zweiten Harzschicht mit einer Dicke von 10 bis 50 $\mu$m auf der anderen Oberfläche des Stahlblechs;
   wobei die Menge an freiem Zinn einen Wert darstellt, der durch ein elektrolytisches Strippverfahren gemessen wird, das in einem Verfahren zur Bestimmung der an Weißblech anhaftenden Zinnmenge, das im JIS G 3303-2998 vorgeschrieben ist, verwendet wird.

6. Ein Verfahren zur Herstellung eines harzbeschichteten Stahlblechs nach Anspruch 5, wobei das Stahlblech auf eine Temperatur erwärmt wird, die nicht unter dem Schmelzpunkt des Zinns liegt, nachdem die erste Harzschicht gebildet worden ist.

**Revendications**

1. Plaque en acier revêtue de résine utilisée pour former une boîte emboutie et étirée, la plaque en acier revêtue de résine comprenant :

   une plaque en acier ;
   une première couche d'étamage qui est formée sur une surface de la plaque en acier qui devient la surface extérieure de la boîte et a une quantité d'étain libre de #20 à #150 ;
   une première couche de résine qui est formée sur la première couche d'étamage et a une épaisseur de 0,01 à 3,0 $\mu$m ; et
   une seconde couche de résine qui est formée sur la surface de la plaque en acier qui devient la surface intérieure de la boîte et a une épaisseur de 10 à 50 $\mu$m, une seconde couche d'étamage ayant une quantité d'étain libre de #2 à #16 étant formée entre la plaque en acier et la seconde couche de résine ; la quantité d'étain libre étant une valeur mesurée par une méthode de dégalvanisation électrolytique utilisée dans une méthode de mesure d'adhérence de l'étain de la plaque d'étain comme stipulé dans JIS G 3303-2998.

2. Plaque en acier revêtue de résine selon la revendication 1, dans laquelle la première couche de résine a une dureté de Marten de 50 N/mm$^2$ à une température de 25 °C.

3. Plaque en acier revêtue de résine selon la revendication 1, dans laquelle la température de transition vitreuse de la première couche de résine n'est pas inférieure à 20 °C.

4. Plaque en acier revêtue de résine selon la revendication 1, dans laquelle la rugosité moyenne arithmétique de la surface de la première couche d'étamage n'est pas supérieure à 0,15 $\mu$m.

5. Méthode de fabrication d'une plaque en acier revêtue de résine comprenant les étapes suivantes :

la formation d'une première couche d'étamage ayant une quantité d'étain libre de #20 à #150 sur une surface d'une plaque en acier ;
la formation d'une seconde couche d'étamage ayant une quantité d'étain libre de #2 à #16 sur l'autre surface de la plaque en acier ;
la formation d'une première couche de résine ayant une épaisseur de 0,01 à 3,0 $\mu$m sur la première couche d'étamage ; et
la formation d'une seconde couche de résine ayant une épaisseur de 10 à 50 $\mu$m sur l'autre surface de la plaque en acier ;
la quantité d'étain libre étant une valeur mesurée par une méthode de dégalvanisation électrolytique utilisée dans une méthode de mesure d'adhérence de l'étain de la plaque d'étain comme stipulé dans JIS G 3303-2998.

6. Méthode de fabrication d'une plaque en acier revêtue de résine selon la revendication 5, dans laquelle la plaque en acier est chauffée à une température qui n'est pas inférieure au point de fusion de l'étain après formation de la première couche de résine.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034322 A